(19) Europäisches Patentamt
European Patent Office
Office européen des brevets

(11) **EP 1 813 452 A1**

(12) **EUROPÄISCHE PATENTANMELDUNG**

(43) Veröffentlichungstag:
**01.08.2007 Patentblatt 2007/31**

(51) Int Cl.:
*B60G 21/055* (2006.01)

(21) Anmeldenummer: **06023594.2**

(22) Anmeldetag: **14.11.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **31.01.2006 DE 102006004264**

(71) Anmelder: **Hydac Electronic GmbH**
**66128 Saarbrücken (DE)**

(72) Erfinder: **Daniel, Thomas**
**66822 Lebach (DE)**

(74) Vertreter: **Bartels & Partner**
**Lange Strasse 51**
**70174 Stuttgart (DE)**

(54) **Stabilisierungseinrichtung für ein mehrachsiges Fahrzeug**

(57) Die Erfindung betrifft eine Stabilisierungseinrichtung für ein mehrachsiges Fahrzeug mit je einem für eine Vorder (VA)- und eine Hinterachse (HA) vorgesehenen hydraulischen Steuerkreis (10,12). Dadurch, dass ein Volumenstrom mindestens eine der Achsen von einem Stromregelventil (22) geregelt ist, und dass bei einem höheren Leistungsvermögen einer Versorgungseinheit (18) der damit einhergehende Überschuß an Volumenstrom an mindestens eine der anderen Achsen, die ungeregelt ist, weitergebbar ist, ist im Überschußfall an Volumenstrom dieser an der mittels des Stromregelventils geregelten Achse konstant gehalten und ein Überschußanteil gelangt an die jeweilige ungeregelte Achse.

Fig.1

EP 1 813 452 A1

**Beschreibung**

Die Erfindung betrifft eine Stabilisierungseinrichtung für ein mehrachsiges Fahrzeug mit je einem für eine Vorder- und eine Hinterachse vorgesehenen hydraulischen Steuerkreis, die

- in der Art einer Parallelschaltung ausgebildet sind,
- jeweils mindestens ein Stellglied für die jeweilige Achse ansteuern,
- an eine hydraulische Versorgungseinheit mit variablem Leistungsvermögen anschließbar sind und
- abhängig vom Leistungsvermögen der Versorgungseinheit zu ihrer Ansteuerung vorgebbare Mengen eines Volumenstroms erhalten.

Durch die DE 196 49 187 C2 ist eine hydraulische Stabilisierungseinrichtung für ein zweiachsiges Kraftfahrzeug bekannt mit einem für die Fahrzeug-Vorderachse und einem für die Fahrzeug-Hinterachse vorgesehenen hydraulischen Stellglied sowie mit jeweils einem zwischen einer Druckleitung und einer Tankleitung angeordneten Schaltventil, das derart einstellbar ist, dass die Druckleitung mit einer ersten Arbeitskammer und die Tankleitung mit einer zweiten Arbeitskammer eines jeweiligen hydraulischen Stellgliedes bzw. umgekehrt verbunden ist, sowie mit einem einstellbaren Druckbegrenzungsventil, das in einer Verbindungsleitung zwischen der der Vorderachse zugeordneten Druckleitung und der Tankleitung parallel zum Vorderachs-Schaltventil vorgesehen ist, und mit einem weiteren Druckregelventil, durch welches der in der Druckleitung des Hinterachs-Schaltventils herrschende Druck auf einen Wert eingestellt wird, der nicht höher als derjenigen in der Vorderachs-Druckleitung ist.

Die bekannte Lösung stellt zu jedem Zeitpunkt sicher, dass der Hydraulikdruck am Hinterachs-Stellglied nie größer wird als derjenige am Vorderachs-Stellglied, wobei der Hydraulikdruck am Hinterachs-Stellglied nahezu beliebig einstellbar ist. Die bekannte Lösung mit ihren Steuerkreisen ist in der Art einer Reihenschaltung aufgebaut und da der Steuerkreis für die Vorderachse immer einen höheren Druck aufweist als der Steuerkreis mit der Hinterachse, sind bezogen auf die gewünschte Fahrstabilität bei der bekannten Lösung auch erhöhten Sicherheitsanforderungen Genüge getan.

Neben dieser bekannten Reihenschaltungslösung sind im Stand der Technik frei auf dem Markt erhältliche Stabilisierungseinrichtungen bekannt, bei denen der jeweilige Steuerkreis für die Vorder- und die Hinterachse mit einer eigenen Versorgungseinheit in Form einer zuordenbaren hydraulischen Pumpe versehen ist. Die jeweils für den Vorderachskreis sowie für den Hinterachskreis eingesetzte Hydraulikpumpe wird mit der jeweils anderen Hydraulikpumpe als Tandempumpe ausgebildet, d.h. mit nur einem Antriebsmotor (Elektromotor, Verbrennungsmotor, etc.) werden gleichzeitig und gleichsinnig beide hydraulischen Pumpen angesteuert.

Mit zunehmender Drehzahl der Tandempumpe nimmt auch deren zu fördernder Volumenstrom zu, der entsprechend der geometrischen Fördervolumina in den jeweiligen Steuerkreis von Vorder- und Hinterachse eingespeist wird. Bei einer Drehzahländerung an der hydraulischen Versorgungseinheit kommt es also aufgrund der Tandempumpenanordnung zu einer entsprechenden Änderung des Volumenstromes im vorgebbaren Mengenaufteilungsverhältnis zwischen den beiden Steuerkreisen. Bei der dahingehenden Lösung ist mithin sicherzustellen, dass der Steuerkreis mit der Hinterachse immer einen ausreichenden Volumenstrom bekommt, so dass das angesprochene Mengenaufteilungsverhältnis zunächst bei minimaler Pumpenleistung der Tandempumpe festzulegen ist. Ebenso wird bei höheren Pumpenleistungen aufgrund der Drehzahlabhängigkeit der Tandempumpe der überschüssige Volumenstrom prozentual ebenso aufgeteilt und dann im dahingehend vorgegebenen Verhältnis gleichermaßen an den jeweiligen Steuerkreis von Vorder- und Hinterachse weitergegeben. Um ein stabiles System zu erhalten und mithin um ungewollt Schwingungen durch Rückkopplungen zu vermeiden, bedarf es einer sehr guten Auslegung des Gesamtsystems unter Einbezug der drehzahlabhängigen Tandempumpe, die im übrigen teuer in der Anschaffung und im Betrieb ist.

Ausgehend von diesem Stand der Technik liegt der Erfindung die Aufgabe zugrunde, die bekannte Parallelschaltung für eine Stabilisierungseinrichtung dahingehend weiter auszubilden, dass sie funktionssicher im Gebrauch ist sowie aufgrund weniger Bauteile kostengünstig herstellbar und funktionssicher im Betrieb ist. Eine dahingehende Aufgabe löst eine Stabilisierungseinrichtung mit den Merkmalen des Patentanspruches 1 in seiner Gesamtheit.

Dadurch, dass gemäß dem kennzeichnenden Teil des Patentanspruches 1 der Volumenstrom mindestens eine der Achsen von einem Stromregelventil geregelt ist, und dass bei einem höheren Leistungsvermögen der Versorgungseinheit der damit einhergehende Überschuß an Volumenstrom an mindestens eine der anderen Achsen, die ungeregelt ist, weitergebbar ist, tritt an die Stelle der konventionellen Mengenaufteilung mit vorgebbaren prozentualen Volumenverhältnissen eine definierte Regelung und im Überschußfall an Volumenstrom bleibt der Volumenstrom an der mittels des Stromregelventiles geregelten Achse konstant und der Überschußanteil gelangt an die jeweilige ungeregelte Achse. Hierdurch ist unter anderem erreicht, dass die gewünschte Wankstabilisierung an der nicht geregelten Achse vom Ansteuerverhalten her höher dynamisch ausgelegt ist. Auch kann man bei der erfindungsgemäßen Lösung auf kostenintensive Tandempumpen bei der Realisierung der Parallelschaltung verzichten und durch den Einsatz von Stromregelventilen, die im übrigen sehr funktionssicher arbeiten, läßt sich insoweit auch der Kostenaufwand für den Erhalt der erfindungsgemäßen Stabilisierungseinrichtung reduzieren.

Vorzugsweise ist vorgesehen als geregelte Achse die Hinterachse des Fahrzeuges zu nehmen und als ungeregelte Achse die Vorderachse.

Bei einer bevorzugten Ausführungsform der erfindungsgemäßen Stabilisierungseinrichtung ist vorgesehen, dass das Stromregelventil in den hydraulischen Steuerkreis der Hinterachse geschaltet ist. Vorzugsweise ist dabei weiter vorgesehen, dass das Stromregelventil ein Zwei-Wege-Stromregelventil ist und dass bei einer Ausgestaltung als Drei-Wege-Stromregelventil ein hydraulischer Abzweig des Ventils, der in Richtung der hydraulischen Versorgungseinheit weist, in den hydraulischen Steuerkreis für die Vorderachse mündet. Die dahingehend eingesetzten Ventile sind marktüblich und kostengünstig zu erhalten und aufgrund ihres einfachen konstruktiven Aufbaus auch im lang andauernden Betrieb funktionssicher. Die genannten Stromregelventile dienen zur nahezu druckunabhängigen Einstellung eines Öl- oder Fluidstroms in einer Richtung. Sie teilen, wie dargelegt, den Eingangsvolumenstrom in einen geregelten Konstantstrom und einen variablen Reststrom auf. Der variable Reststrom ist druckbelastbar und kann einem zweiten Verbraucher zugeführt werden. Sofern das Stromregelventil als Drei-Wege-Stromregelventil ausgebildet ist, kann ein sog. Reststromausgang des Ventils verschlossen und dann das Ventil als Zwei-Wege-Stromregelventil eingesetzt werden.

Weitere vorteilhafte Ausführungsformen der erfindungsgemäßen Lösung sind Gegenstand der sonstigen Unteransprüche.

Im folgenden wird die erfindungsgemäße Stabilisierungseinrichtung anhand zweier Ausführungsformen nach der Zeichnung näher erläutert. Dabei zeigen in prinzipieller und nicht maßstäblicher Darstellung in der Art von Schaltplänen die

Fig.1 und 2     zwei verschiedene Ausführungsformen der Stabilisierungseinrichtung und die

Fig.3     den grundsätzlichen Aufbau, teilweise im Längsschnitt gesehen, für ein Zwei-Wege-Stromregelventil, wie es bei der Schaltung nach der Fig.2 eingesetzt ist.

Der grundsätzliche Aufbau und die Funktion einer Wankstabilisierung für ein Kraftfahrzeug ist bezogen auf eine realisierte Reihenschaltung für die hydraulischen Steuerkreise in der DE 196 49 187 C2 hinlänglich beschrieben, so dass auf die näheren Einzelheiten der Wankstabilisierungstechnologie an dieser Stelle nicht mehr näher eingegangen wird.

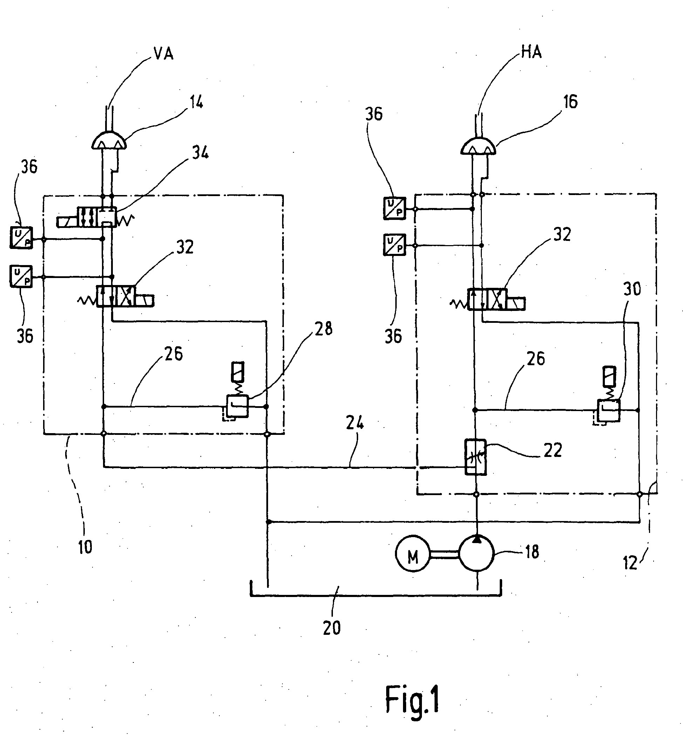

Die hydraulische Stabilisierungseinrichtung nach der Fig.1 dient einem mehrachsigen, insbesondere zweiachsigen Kraftfahrzeug üblicher Bauart. Die Stabilisierungseinrichtung weist einen hydraulischen Steuerkreis 10 für die Vorderachse VA eines Fahrzeuges auf sowie einen hydraulischen Steuerkreis 12 für die Hinterachse HA desselben. Die beiden Steuerkreise 10,12 sind in der Art einer Parallelschaltung miteinander verschaltet und an jeden Steuerkreis 10,12 sind separate Stellglieder 14,16 angeschlossen; einmal für die Vorderachse VA, einmal für die Hinterachse HA. Die zum Einsatz kommenden Stellglieder 14,16 können in der Art hydraulischer Stellmotoren ausgebildet sein, aber auch aus üblichen Aktuatoren oder sonstigen Stellmitteln, die für die dahingehende Anwendungsaufgabe geeignet sind, bestehen. Ferner sind die beiden Steuerkreise 10,12 an eine hydraulische Versorgungseinheit 18 angeschlossen sowie an einen Sammeltank 20. Wie in der Hydraulik üblich wird in den Figuren der Tankanschluß auch mit T wiedergegeben sowie der Anschluß für die Versorgungseinheit 18 mit P für Pumpenanschluß. Die hydraulische Versorgungseinheit 18 weist eine übliche Hydropumpe auf, die drehzahlabhängig von einem Motor, beispielsweise einem Kraftfahrzeug-Dieselmotor oder Teilen desselben, angetrieben wird, so dass die hydraulische Versorgungseinheit auf der Pumpenausgangsseite in Abhängigkeit der Drehzahl des Motors über ein variables Leistungsvermögen verfügt.

Ferner ist ein 3-Wege-Stromregelventil 22 vorgesehen, das in Abhängigkeit des Leistungsvermögens der Versorgungseinheit 18 den derart zur Verfügung gestellten Volumenstrom für den hydraulischen Steuerkreis 12 der Hinterachse HA bedarfsgerecht regelt und ansonsten wird die nicht zur Wankstabilisierung der Hinterachse benötigte Fluidmenge an den Steuerkreis 10 der Vorderachse VA weitergegeben. Somit ist das 3-Wege-Stromregelventil 22 in der Lage den Eingangsvolumenstrom in einen Konstantstrom für die Hinterachse HA und einen Reststrom für die Vorderachse VA aufzuteilen, wobei der dahingehende Reststrom druckbelastbar ist und insoweit dem zweiten Verbraucher in Form des Stellgliedes 14 für die Vorderachse VA zugeleitet wird. Dabei ergeben sich die folgenden Formelzusammenhänge

$$Q_{VA} = Q_{pumpe} - Q_{HA\ geregelt}$$

$$Q_{A1} = Q_{Pumpe} - Q_{A\ geregelt}$$

mit

Q = Volumenstrom,
VA = Vorderachse,
HA = Hinterachse,
Pumpe = Hydropumpe der Versorgungseinheit 18,
A = allgemein Achse oder Achsen.

Steigt nun drehzahlabhängig das Leistungsvermögen der Hydraulikpumpe (Versorgungseinheit 18), bleibt die Versorgung aufgrund des Drei-Wege-Stromregelventils für die Hinterachse HA mit dem zuordenbaren Stellglied 16 konstant, wohingegen der Volumenstrom für die Vorderachse VA mit ihrem Stellglied 14 zunimmt. Die dahingehende Regelung und Überschußableitung an die Vorderachse VA führt zu einem hohen dynamischen Fahrverhalten mit sehr guten Wankstabilisierungswerten, was insgesamt der Fahrsicherheit zugute kommt. Für die dahingehende Ansteuerung der Vorderachse weist das Drei-Wege-Stromregelventil einen hydraulischen Abzweig 24 auf, der in Richtung der Versorgungseinheit 18 weist und in den hydraulischen Steuerkreis 10 für die Vorderachse VA mündet. Insoweit wird über das Drei-Wege-Stromregelventil der Pumpendruck der Versorgungseinheit 18 über den Abzweig 24 an den Pumpenanschluß P des Steuerkreises 10 weitergegeben, wohingegen über eine Regeleinrichtung, wie eine einstellbare Drossel od.dgl., der am Pumpenanschluß P des Steuerkreises 12 anstehende Fluiddruck entsprechend geregelt an die Hinterachse HA mit ihrem Stellglied 16 weitergegeben wird.

Wie des weiteren die Schaltungsdarstellung nach der Fig.1 zeigt, ist in jedem Nebenzweig 26 eines jeden Steuerkreises 10,12 ein mittels eines Magneten ansteuerbares Proportional-Druckbegrenzungsventil 28,30 geschaltet. In eine jede Zu- und Ablaufleitung A1, A2, B1, B2 eines jeden Stellgliedes 14,16, die in Richtung der Pumpenanschlußleitung P sowie der Tankanschlußleitung T eines jeden Steuerkreises 10,12 ausmünden, sind Schaltventile angeordnet, insbesondere in Form von ansteuerbaren 4/2-Wege-Ventilen 32. Darüber hinaus ist für die Vorderachse VA zwischen dem Stellglied 14 und dem 4/2-Wege-Ventil 32 ein weiteres Schaltventil 34, insbesondere in Form eines 4/2-Wege-Ventils, geschaltet, das in seiner in der Fig.1 gezeigten Stellung die Anschlüsse A1,A2 des Stellgliedes 14 absperrt und ansonsten eine fluidführende Verbindung über eine interne Umlenkleitung zwischen dem Pumpenanschluß P und dem Tankanschluß T des Steuerkreises 10 herstellt.

In der anderen betätigten Schaltstellung wird insoweit eine fluidführende Verbindung zwischen Pumpenanschluß P dem Anschluß A1 sowie dem Tankanschluß T und dem Anschluß A2 hergestellt unter der Bedingung, dass das Ventil 32 des Steuerkreises 10 seine in der Fig.1 dargestellte Durchlaßstellung einnimmt. Des weiteren ist zur Ansteuerung der Stabilisierungseinrichtung in jeden Zu- und Ablauf A1,A2,B1,B2 ein Druckwertaufnehmer 36 in Form eines Drucksensors geschaltet. Das als Regeleinrichtung eingesetzte Stromregelventil 22 ist konstruktiv robust und einfach ausgelegt sowie betriebssicher im Gebrauch. Wartungsarbeiten treten regelmäßig bei dahingehenden Stromregelventilen nicht auf. Ferner sind sie als marktgängiges Produkt kostengünstig zu erhalten. Durch ihren Einsatz für Wank- und/ oder Nick-Stabilisierungseinrichtungen gemäß dem grundsätzlichen Schaltungsaufbau nach der Fig.1 ersetzen sie bei Paralielschaltungen die teuren Tandempumpenanordnungen, die darüber hinaus einen rückkopplungsfreien stabilen Betrieb nicht umfassend gewährleisten können, insbesondere wenn die Tandempumpenanordnung drehzahlabhängig vom Leistungsvermögen her hochgefahren wird und dann den Überschuß an Volumenstrom gleichermaßen an das jeweilige Stellglied für die Vorderachse VA und Hinterachse HA in der gleichen Mengenaufteilung einspeist.

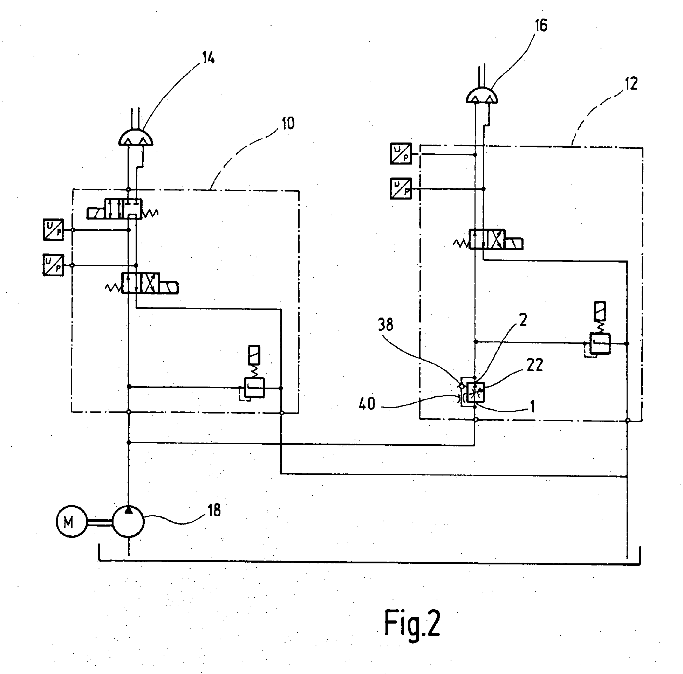

Die weitere Ausführungsform einer Stabilisierungseinrichtung nach der Fig.2 entspricht weitgehend der Ausführungsform nach der Fig.1 und wird nur noch insofern erläutert, als sie sich wesentlich vom vorangehenden Ausführungsbeispiel unterscheidet. Dabei werden dieselben Bauteile auch mit denselben Bezugszeichen, wie in Fig.1 genannt, wiedergegeben und die insoweit getroffenen Ausführungen gelten dann auch für die geänderte Ausführung nach der Fig.2.

Der wesentliche Unterschied ist, dass bei der Fig. 2 als Regeleinrichtung ein 2-Wege-Stromregelventil 22 verwendet wird. Sofern in der Fig. 2 das Stromregelventil 22 dargestellt ist, gehören die Ventilteile 38, 40 insoweit mit hinzu die insgesamt zeichnerisch das Stromregelventil 22 symbolisieren. Auch bei der geänderten Ausführungsform nach der Fig. 2 sind wiederum die Pumpenanschlüsse P und die Tankanschlüsse T beider Steuerkreise 10, 12 miteinander fluidführend verbunden. Auch mit dem dahingehenden Zwei-Wege-Stromregelventil nach Ausgestaltung Fig.2 ist der Erhalt eines konstanten Volumenstromes für das Stellglied 16 der Hinterachse HA erreicht und die drehzahlabhängig variablen Überschußanteile werden zur Fahrdynamikverbesserung, wie bereits dargelegt, an das jeweilige Stellglied 14 der Vorderachse VA weitergeleitet. Mit dem dahingehenden Zwei-Wege-Stromregelventil läßt sich noch kostengünstiger die Schaltung aufbauen als mit der Drei-Wege-Stromregelventillösung gemäß Darstellung nach der Fig.1.

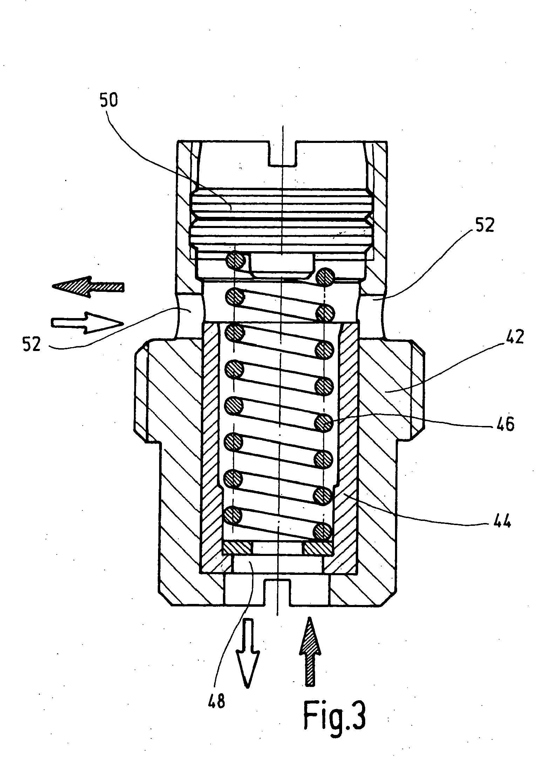

Ein dahingehendes Zwei-Wege-Stromregelventil 22, wie es nach der Fig.2 eingesetzt ist, ist in der Fig.3 in der Art einer Längsschnittdarstellung präziser dargestellt. Die schwarzen Pfeile in der Fig.3 geben den geregelten Volumenstrom an, und die weiß gehaltenen, umrandeten Pfeile geben den ungeregelten Volumenstrom wieder. Das dahingehende Ventil weist zunächst ein Ventilgehäuse 42 auf, das in der Art einer Einschraubpatrone ausgebildet sein kann. In dem Ventilgehäuse 42 ist längsverfahrbar ein gehärteter Regelkolben 44 geführt, in dem eine Druckfeder 46 verläuft, die sich mit ihrem einen unteren freien Ende in Blickrichtung auf die Fig.3 gesehen an der Innenseite des Regelkolbens 44 abstützt, der insoweit eine einwärts weisende Stufe aufweist, die einen Mittendurchlaß 48 für Fluid umfaßt, und das andere Ende der Druckfeder 46 stützt sich an einer Stell-Konterschraubenanordnung 50 ab, über die die Regelkraft der Druckfeder 46 einstellbar ist. Radial im Ventilgehäuse 42 sind weitere Durchlaßöffnungen 52 vorgesehen, die sich quer zum Mittendurchlaß 48 erstrecken, der sich in Längsrichtung des Ventilgehäuses 42 am Boden desselben erstreckt. Insoweit ist bodenseitig, bezogen auf das Ventilgehäuse 42, eine Art Meßblende realisiert und im Bereich der Durchlaßöffnungen 52 in Verbindung mit dem Regelkolben 44 eine Art Regelblende für das durchzulassende Fluid. Die in der Fig.3 mit 1 und 2 angegebenen Anschlußstellen sind insoweit in der Fig. 2 für die Regeleinrichtung 22 korrespondierend nachgetragen.

Es hat sich im Rahmen praktischer Versuche gezeigt, dass beim Einsatz von Stromregelventilen 22 als jeweilige Regeleinrichtung in Verbindung mit den Proportionaldruckbegrenzungsregelventilen, die einen eigenen Verstärkungsfaktor haben, es zu einer stabilen Auslegung der hydraulischen Stabilisierungseinrichtung kommt, d.h. ungewollte schädigende Schwingungen durch Rückkopplungen sind mit Sicherheit bei entsprechender Systemauslegung vermieden.

**Patentansprüche**

1. Stabilisierungseinrichtung für ein mehrachsiges Fahrzeug mit je einem für eine Vorder(VA)- und eine Hinterachse (HA) vorgesehenen hydraulischen Steuerkreis (10,12), die

    - in der Art einer Parallelschaltung ausgebildet sind,
    - jeweils mindestens ein Stellglied (14,16) für die jeweilige Achse (VA,HA) ansteuern,
    - an eine hydraulische Versorgungseinheit (18) mit variablem Leistungsvermögen anschließbar sind und
    - abhängig vom Leistungsvermögen der Versorgungseinheit (18) zu ihrer Ansteuerung vorgebbare Mengen eines Volumenstromes erhalten,

    **dadurch gekennzeichnet, dass** der Volumenstrom mindestens eine der Achsen von einem Stromregelventil (22) geregelt ist, und dass bei einem höheren Leistungsvermögen der Versorgungseinheit (18) der damit einhergehende Überschuß an Volumenstrom an mindestens eine der anderen Achsen, die ungeregelt ist, weitergebbar ist.

2. Stabilisierungseinrichtung nach Anspruch 1, **dadurch gekennzeichnet, dass** die Hinterachse (HA) des Fahrzeuges die geregelte und die Vorderachse (VA) die ungeregelte Achse ist.

3. Stabilisierungseinrichtung nach Anspruch 1 oder 2, **dadurch gekennzeichnet, dass** das Stromregelventil in den hydraulischen Steuerkreis (16) der Hinterachse (HA) geschaltet ist.

4. Stabilisierungseinrichtung nach einem der Ansprüche 1 bis 3, **dadurch gekennzeichnet, dass** das Stromregelventil ein Zwei- oder Drei-Wege-Stromregelventil ist und dass bei einer Ausgestaltung als Drei-Wege-Stromregelventil ein hydraulischer Abzweig (24) des Ventils, der in Richtung der Versorgungseinheit (18) weist, in den hydraulischen Steuerkreis (10) für die Vorderachse (VA) mündet.

5. Stabilisierungseinrichtung nach einem der Ansprüche 1 bis 4, **dadurch gekennzeichnet, dass** in einen Nebenzweig (26) eines jeden Steuerkreises (10,12) ein ansteuerbares Proportionaldruckbegrenzungsventil (28,30) geschaltet ist.

6. Stabilisierungseinrichtung nach einem der Ansprüche 1 bis 5, **dadurch gekennzeichnet, dass** der Steuerdruck in jedem Steuerkreis (10,12) mittels Drucksensoren (36) überwacht ist.

7. Stabilisierungseinrichtung nach einem der Ansprüche 1 bis 6, **dadurch gekennzeichnet, dass** die Zuleitungen (A1,A2,B1,B2) zu jedem Stellglied (14,16) mittels Wege-Ventilen (32,34), vorzugsweise 4/2-Wege-Ventilen ansteuerbar sind.

8. Stabilisierungseinrichtung nach Anspruch 6, **dadurch gekennzeichnet, dass** in die Zuleitungen (A1,A2) zum Stellglied (14) der Vorderachse (VA) zwischen dem 4/2-Wege-Ventil (32) und diesem Stellglied (14) ein weiteres 4/2-Wege-Ventil (34) geschaltet ist.

Fig.1

Fig.2

Fig.3

**Europäisches Patentamt**

## EUROPÄISCHER RECHERCHENBERICHT

Nummer der Anmeldung

EP 06 02 3594

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 43 37 765 A1 (FICHTEL & SACHS AG [DE]) 11. Mai 1995 (1995-05-11) * das ganze Dokument * | 1-8 | INV. B60G21/055 |
| X | DE 20 2005 001001 U1 (TRW AUTOMOTIVE SAFETY SYS GMBH [DE]) 2. Juni 2005 (2005-06-02) * Absatz [0003]; Abbildung 1 * | 1-8 | |
| D,A | DE 196 49 187 C2 (BAYERISCHE MOTOREN WERKE AG [DE]) 6. September 2001 (2001-09-06) * das ganze Dokument * | 1 | |
| A | JP 05 042813 A (NIPPON DENSO CO) 23. Februar 1993 (1993-02-23) * Abbildung 4 * | 1 | |
| A | DE 196 13 769 A1 (FICHTEL & SACHS AG [DE]) 10. Oktober 1996 (1996-10-10) * das ganze Dokument * | 1 | |
| A | EP 1 426 210 A (BAYERISCHE MOTOREN WERKE AG [DE]) 9. Juni 2004 (2004-06-09) * das ganze Dokument * | 1 | RECHERCHIERTE SACHGEBIETE (IPC)<br><br>B60G |
| A | WO 2004/085178 A (LUK FAHRZEUG HYDRAULIK [DE]; AGNER IVO [DE]) 7. Oktober 2004 (2004-10-07) * das ganze Dokument * | 1 | |
| A | DE 43 26 447 A1 (REXROTH MANNESMANN GMBH [DE]) 9. Februar 1995 (1995-02-09) * das ganze Dokument * | 1 | |
| A | JP 09 156338 A (KAYABA INDUSTRY CO LTD) 17. Juni 1997 (1997-06-17) * Zusammenfassung * | 1 | |

-/--

Der vorliegende Recherchenbericht wurde für alle Patentansprüche erstellt

| Recherchenort | Abschlußdatum der Recherche | Prüfer |
|---|---|---|
| Den Haag | 5. April 2007 | Schultze, Yves |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**Europäisches Patentamt**

**EUROPÄISCHER RECHERCHENBERICHT**

Nummer der Anmeldung

EP 06 02 3594

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 03/101768 A (TRW AUTOMOTIVE U S LLC [US]; CAMPAU GREGORY P [US]; HUNNICUTT HARRY A) 11. Dezember 2003 (2003-12-11) * Abbildung 9 * ----- | 1 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 5. April 2007 | Schultze, Yves |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EP 1 813 452 A1

**ANHANG ZUM EUROPÄISCHEN RECHERCHENBERICHT**
**ÜBER DIE EUROPÄISCHE PATENTANMELDUNG NR.**

EP 06 02 3594

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-04-2007

| Im Recherchenbericht angeführtes Patentdokument | | Datum der Veröffentlichung | Mitglied(er) der Patentfamilie | | Datum der Veröffentlichung |
|---|---|---|---|---|---|
| DE 4337765 | A1 | 11-05-1995 | KEINE | | |
| DE 202005001001 | U1 | 02-06-2005 | WO | 2006077122 A2 | 27-07-2006 |
| DE 19649187 | C2 | 06-09-2001 | DE | 19649187 A1 | 28-05-1998 |
| JP 5042813 | A | 23-02-1993 | KEINE | | |
| DE 19613769 | A1 | 10-10-1996 | FR | 2732649 A1 | 11-10-1996 |
| | | | US | 5735540 A | 07-04-1998 |
| EP 1426210 | A | 09-06-2004 | DE | 10256682 A1 | 17-06-2004 |
| WO 2004085178 | A | 07-10-2004 | KEINE | | |
| DE 4326447 | A1 | 09-02-1995 | KEINE | | |
| JP 9156338 | A | 17-06-1997 | JP | 3682330 B2 | 10-08-2005 |
| WO 03101768 | A | 11-12-2003 | AU | 2003237356 A1 | 19-12-2003 |
| | | | EP | 1509415 A1 | 02-03-2005 |

EPO FORM P0461

Für nähere Einzelheiten zu diesem Anhang : siehe Amtsblatt des Europäischen Patentamts, Nr.12/82

11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19649187 C2